# EUROPEAN PATENT SPECIFICATION

(11) **EP 1 575 757 B1**
(45) Date of publication and mention of the grant of the patent: **22.05.2013**
(21) Application number: 03789316.1
(22) Date of filing: 17.12.2003
(51) Int. Cl.: B29C 67/24, D04H 1/64, B29C 35/06

(54) **DEVICE AND METHOD FOR PRODUCING INSULATION ELEMENTS**
VERFAHREN UND VORRICHTUNG ZUR HERSTELLUNG VON DÄMMSTOFFELEMENTEN
DISPOSITIF ET PROCEDE DE PRODUCTION D'ELEMENTS D'ISOLATION

(30) Priority: 18.12.2002 DE 10259336
(43) Date of publication of application: 21.09.2005
(73) Proprietor: SAINT-GOBAIN ISOVER, 92400 Courbevoie (FR)
(72) Inventor: MUTH, Andreas, 68239 Mannheim (DE); RIEGER, Andreas, 45731 Waltrop (DE); PERNER, Jens, 67434 Neustadt (DE)
(74) Representative: Bockhorni & Kollegen
(86) International application number: PCT/EP2003/014421
(87) International publication number: WO 2004/054787

(56) References cited:
- WO-A-00/44540
- BE-A- 621 183
- FR-A- 1 319 956
- US-A- 2 997 096
- US-A- 3 077 426
- US-A- 3 518 157

## Description

This invention relates to a device according to the preamble of claim 1, a method according to the preamble of claim 10 and an insulation element according to the preamble of claim 13.

Insulation elements made of mineral wool such as rock wool or glass wool, which are provided with a binder that bonds the mineral fibers together on curing, have been known for a long time. Insulation elements of this kind have proved their value in practice and are used in a large number of applications. They possess particularly good thermal insulation properties, are inexpensive, and easy to process.

Insulation elements of this kind are used, for example, to insulate flat roofs with low roof pitch. Since the roof covering, such as the high-polymer or bituminous roof sheeting used for the roof skin, has to be applied directly above the insulation material in the case of flat roofs of this kind, the insulation panels must have the necessary gradient to ensure effective rainwater run-off from the sloping roof.

To this end, insulation panels, which are usually of rectangular cross section, are fabricated suitably according to the prior art by cutting or milling them into the desired shape so as to produce an appropriate wedge shape with a gradient. Depending on the batch size, this type of fabrication can be relatively expensive. Whereas material loss due to cutting and milling waste can usually be limited by utilizing this waste as recycling material, the dust caused by processing of this kind must as a rule be extracted and disposed of. The additional technical facilities and the extra time needed increase the price of the product. Generally speaking, production of the mineral wool preform by means of downstream machining processes (cutting, grinding, milling, introduction of folds, etc.) causes additional costs which are then allocated to the respective products.

It is also known from the prior art (DE 43 19 340 C1) how depressions can be generated in an uncured insulation blanket by providing an embossing or molding unit upstream of the curing oven, said molding unit being formed by oppositely disposed pressure belts with calotte-shaped segments having the shape of the desired depressions. The desired depressions are thus introduced into the insulation blanket while it still wet, and then, following the curing process, are filled with mineral bodies by way of which marks are generated to indicate the positions for screw anchors in the insulation blanket or panel. The US patent 4 608 108 describes the use of molding rolls located upstream of the curing oven to produce a decorative, textured surface in an insulation blanket while it is still wet. This decorative textured pattern thus formed in the immediate surface region of the surface is retained after curing. In both the aforementioned cases, suitable embossing or molding units must be installed upstream of the curing oven, and the relief pattern is introduced into the uncured material while it is still wet. However, on account of the inherent resilience of a mineral wool blanket, the relief pattern introduced ahead of the tunnel furnace is, at least to some extent, lost again, so that secondary finishing is necessary.

DE 43 19 340 C1 discloses the preamble of claims 1, 10 and 13.

WO 00/44540 A discloses a device for producing medium density fibreboards (MDFs). It teaches to use steam for molding and curing the MDFs.

BE 621 183 A, which is considered to represent the closest prior art discloses production methods for fibre elements wherein the fibre used in BE 621 183 A is different from mineral wool. However, the document teaches to perform a molding and curing in a tunnel furnace. Therefore, the fibre elements are transported through the tunnel furnace and molded therein.

From FR 1 319 956 it is known to produce mineral wool elements having little indentations and inclusions to provide a surface which is suitable for interior fitting without additional plastering or coating.

US 3,077,426 discloses panels with compacted boundary regions, wherein special arrangements of the boundary area are disclosed. The aim is to provide elements allowing an interlocking along their boundaries.

The object of this invention is thus to provide a method and a device for producing insulation elements made of mineral wool, by means of which insulation elements can be readily shaped inexpensively "on line", without the need for machining or other secondary finishing processes.

This object is established by a device having the features of claim 1 and a method having the features of claim 10. Additional subject matter of this invention is a mineral-wool insulation element having the features of claim 13. Useful developments of the invention form the subject matter of the dependent claims.

According to the invention, the interior of the curing oven is provided with a molding device which, while reducing the cross section of the gap through which the insulation material is transported within the curing oven and compacting the insulation material or insulation blanket as it passes through, influences the insulation material to such effect that permanent impressions and/or deformations are produced therein. The fact that the impressions and/or deformations in the insulation material are formed inside the curing oven ensures that they are formed exactly as desired with great ease, that is, perfectly in accordance with the profile of the molding device and, in principle, in a manner identical to embossing. This is because the insulation material is cured at the same time that it is pressure-molded; in other words, as the impressions or deformations are formed, their shape is "frozen" by the immediate curing process. As a result, secondary finishing - which is generally costly and time-consuming - can be dispensed with. The invention provides for the use of suitable molding belts, molding rolls or other compacting members within the curing oven, each of these being located at the place where the corresponding impression or deformation is to be produced. Since the impression is produced in an area where curing is not fully complete, a certain amount of material displacement occurs within the worked insulation blanket as a result of compaction; this helps to equalize the density over the cross section of the insulation material despite the compaction that has been effected. This invention is based on the idea of integrating the shaping process in the production process for the insulation body; more specifically, it is based on the idea of integrating the shaping process in the production process at the stage where the insulation material cures. At this stage, it is still easily possible to confer on the insulation material a specified cross-sectional profile that deviates from the original rectangular shape of the uncured mineral wool (e.g. a wedge shape, a rectangular shape with grooves, chamfered portions, etc.).

According to the invention, the insulation material, comprising mineral wool such as rock wool or glass wool, is molded inside the curing oven by a molding device into a shape whose cross section can differ in every conceivable way from the hitherto standard rectangular shape. To this end, it is merely necessary to provide a corresponding molding element in the device for manufacturing the thermal insulation elements, said molding element generating the desired cross-sectional profile by means of contact, especially pressure contact, of the molding element's molding surface with the insulation material to be molded.

To produce insulation elements of this kind from mineral wool and to carry out the corresponding process, hitherto known devices can easily be modified or retrofitted. Basically, there are two different approaches here: either the existing components can be suitably rearranged, or components can readily be added.

Generally, a device for the production of insulation elements from mineral wool is assembled such that the curable-binder-containing mineral fibers are deposited on a conveyor and subsequently transported into a curing oven, in this case a tunnel furnace. In the tunnel furnace, a compacting and guiding unit is usually disposed opposite the conveyor unit in such manner that the insulation material to be cured is moved between the conveyor unit and the compacting and guiding unit. The insulation material may be compacted further during this stage or may simply be guided between the two units. Devices like this can readily be modified according to the invention by designing the conveyor unit and the compacting and guiding unit, which are engineered as endless loops, such that they can be arranged with different inclinations relative to the conveying plane, that is, rotated about the longitudinal conveying axis. This produces an angle between the principal surfaces of the conveyor unit and of the compacting and guiding unit, so that the gap or space between the conveyor unit and the compacting or guiding unit can be wedge-shaped, triangular shaped, etc.

Additional molding elements can also be provided, which can be arranged, for example, in the plane of the conveyor unit and/or opposite the conveyor unit and/or to the side of the conveyor unit on one or both sides, thus making it possible to mold all sides of the insulation element.

In the case of this variant, it is especially beneficial to design appropriate molding elements as attachable elements, for example in the form of strips, which can be attached to the conveyor unit and/or to the compacting and guiding unit, especially in the tunnel furnace. To permit rapid and efficient modification of the device, the attachable elements are preferably provided with quick-release closures that allow rapid fitting of the attachable elements to the conveyor unit and/or compacting and guiding unit.

The attachable elements are preferably designed in a similar manner to conveyors known per se, by means of which the wet insulation material is transported into and through the curing oven. Conveyors of this kind are usually endless loops, or endless loops arranged in tandem, which are provided with openings or perforations to allow compaction by means of a pressurized-air supply, and, within the curing oven, curing by means of a hot-air supply. Within the curing oven, the conveyors are usually formed from grating segments that are hinged at their ends and allow the inflow of hot air to the insulation material. For this reason, it is to advantage if the conveyor units and/or compacting and guiding units within the curing oven are likewise provided with appropriate openings and perforations, or ventilation channels, it also being expedient to design the individual elements in segments that can be hinged together to form a loop conveyor. In particular, the attachable elements are engineered as metal components in the form of gratings, that is, provided with perforations or ventilation channels, and are preferably made of heat-resistant materials. It is to advantage to have the molding devices, especially in the form of attachable elements, rolls, or the like, arranged at the feed end, i.e. in the anterior section of the curing oven, because this is where the curing process begins and where the formation of impressions and/or deformations can be effected easily and without damaging the fibers. If the molding device, e.g. the attachable elements, is engineered to extend a long way into the curing oven, or, as is particularly preferable, to the end of the curing oven, the desired impressions and/or deformations are especially true to shape; they are, so to speak, the identical match of the attachable elements and the like. The attachable elements, in particular, are also designed as segments so that they can move freely around the idle rolls when engineered as endless loops. Additionally, the molding or attachable elements can have any cross-sectional profile desired, for example a rectangular, triangular, trapezoidal shape, etc., so that corresponding grooves can be formed in the insulation material. Depending on how the molding devices are designed, it is also possible to produce pictograms, circular depressions and the like, as well as impressions that can be used, for example, for product markings.

It goes without saying that the features of the described device can be combined in a great variety of ways to produce the desired cross-sectional profile for the insulation element. In particular, by using a variety of molding elements, together or alone, immediately adjacent or arranged sequentially in different sections of the device, a surface contour can be obtained that varies in the transport direction with the section-wise variation in cross-sectional profile. In particular, additional components described here - such as additional molding elements at the sides - can also be provided.

The production process according to the invention has shown that the properties of products made in this way are superior to those of insulation elements that are of comparable cross-sectional profile but are made by prior art processes involving machining steps.

Due to contact between the insulation material to be molded and the molding surface of the molding element, the insulation material is compacted to different degrees depending on its cross-sectional profile; as a result, the finished insulation element has areas of high apparent density and areas of low apparent density depending on its thickness. The useful effect of this is that in thinner areas, the insulation elements have a higher apparent density and thus greater strength, while in very thick areas, where high strength or stability is not required, they have a lower apparent density. With wedge-shaped insulation elements for sloping roofs, for example, the effect is such that the strength of the insulation element is higher at the tip of the wedge than at the opposite end. Since it is precisely the thin area at the tip of the wedge that needs additional strength, insulation elements made in this way display preferable properties. By contrast, wedge-shaped mineral-wool insulation elements produced by prior all processes involving machining steps have a uniform apparent density.

Additional advantages, characteristics and features of this invention become clear from the following detailed description of embodiments and the references to the enclosed drawings, which are of purely diagrammatic nature.
- **Fig. 1**: shows a perspective view of a device for producing insulation elements shaped according to the invention;
- **Fig. 2**: shows a cross section through an insulation element shaped according to the invention;
- **Fig. 3**: shows a perspective view of the insulation element of Fig. 2;
- **Fig. 4**: shows a perspective view of a part of the device of Fig. 1;
- **Fig. 5**: shows a cross section through a part of the device of Fig. 1;
- **Fig. 6**: shows a cross section through an alternative version of the device of Fig. 5;
- **Fig. 7**: shows a partial cross-sectional view of another embodiment of a device for producing the insulation elements shaped according to the invention;
- **Fig. 8**: shows a top view of a part of the device shown in Fig. 7;
- **Fig. 9**: shows a perspective view of the device of Fig. 7;
- **Fig. 10**: shows a cross-sectional view of another embodiment of a device for producing the insulation elements according to the invention.

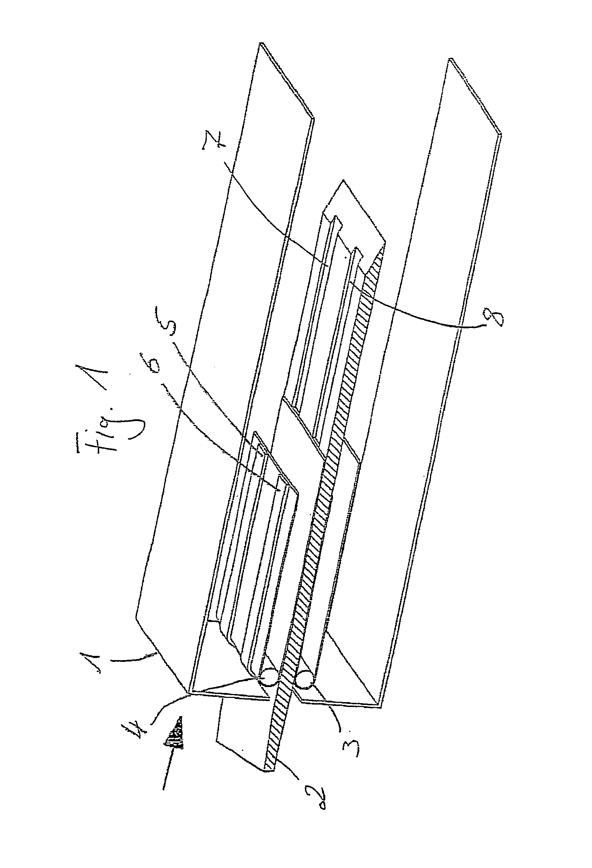

Fig. 1 shows a perspective view of a tunnel furnace 1 into which a mineral-wool insulation blanket 2 is being introduced in the direction indicated by the arrow. This insulation blanket 2 is supported on a conveyor unit that is not shown. Before it enters the tunnel furnace 1, the insulation blanket 2 consists of mineral wool and uncured binder. In the tunnel furnace 1, the mineral-wool blanket 2 is temperature-cured, the binder creating permanent cross-links between the individual mineral fibers as it cures.

In the tunnel furnace 1, a conveyor unit 3 engineered as an endless loop is provided for transporting the insulation material, i.e. the insulation blanket 2, which is on said conveyor unit. Aside from the lower endless loop 3 (conveyor unit), there is an upper endless loop 4 which is designed as a compacting and guiding unit. The upper endless loop 4 simultaneously compacts and/or guides and/or smoothes the upper surface of the mineral-wool blanket 2 while the latter is curing. The hitherto described components of the device shown in Fig. 1 correspond to the standard devices used to produce mineral-wool blankets, and are known from the prior art.

In addition to the components of the known device, however, the device shown in Fig. 1 is provided with an additional molding device having, on the upper endless loop 4, a molding element formed by the attachable elements 5 and 6 on the upper endless loop 4. The attachable elements 5 and 6 are likewise engineered as endless loops, and have a rectangular cross section. The attachable elements 5 and 6 are provided on the compacting or guiding unit 4, that is, on the upper endless loop, and are spaced apart from each other over the breadth of the insulation blanket 2. Provision of the attachable elements 5 and 6 on the upper endless loop 4 causes the insulation material in those areas of the insulation blanket 2 in which the attachable elements 5 and 6 are located on the upper endless loop 4 to be compacted more strongly during curing, so that two recesses or grooves 7 and 8 are formed in the finished insulation blanket 2. Later, after the insulation element has been cut off to form an insulation panel, a fork lift can insert its prongs into these grooves 7 and 8, thus permitting use of the panel as the lower support for a stack of panels. In this way, the support element for the stack can also be constructed as a useful insulation element, obviating the need for a pallet on which the insulation elements have to be stacked. Accordingly, there are also no empty pallets that would otherwise have to be returned or disposed of at the construction site.

In the diagram of Fig. 1, the lower endless loop 3, the upper endless loop 4 and the attachable elements 5 and 6 are depicted as continuous belts. These belts, or loops, can be formed especially by strip-like elements which, in practice, are preferably made of high-temperature steel. The loops accordingly have to be subdivided into suitable hinged segments so that they can move freely around the idle rolls. It is expedient to engineer these segments such that they allow the passage of hot air (grating, perforations, channels).

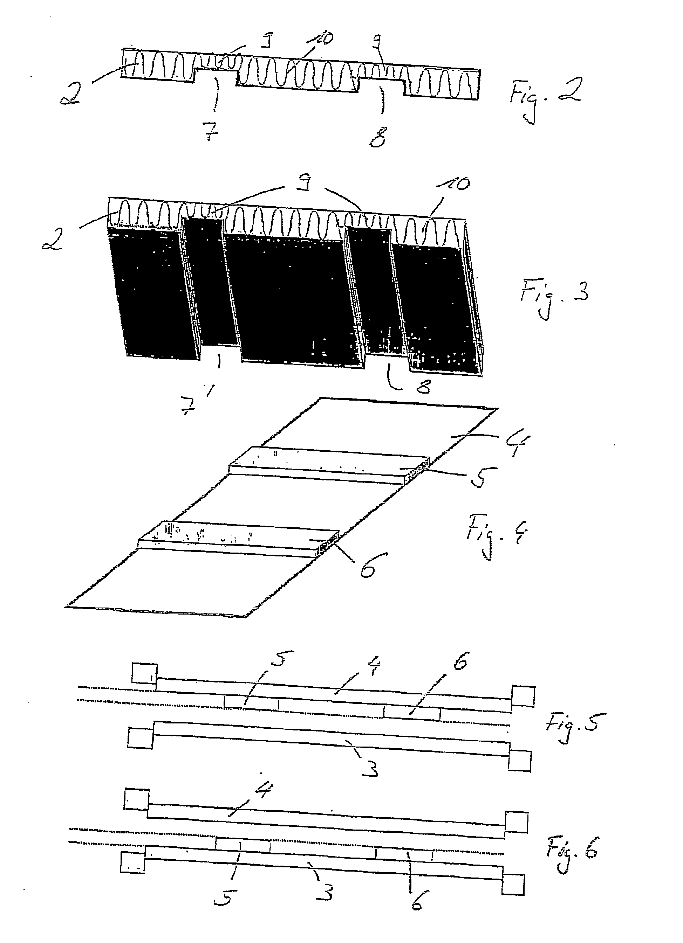

Fig. 2 shows a cross section through the finished product, for example the finished insulation panels 2 obtained by cutting them off the insulation blanket. This diagrammatic, cross-sectional view shows especially clearly that areas of high apparent density 9 are to be found in the area of the grooves 7 and 8, while in the areas where the insulation panel 2 is thicker, that is, where it has not been additionally compacted by formation of grooves 7 and 8, the apparent density is lower (areas with lower apparent density 10).

Fig. 3 shows a perspective view of the insulation panel 2 with grooves 7 and 8. Here too, the areas of high apparent density 9 and those of low apparent density 10 are indicated diagrammatically.

Fig. 4 is a perspective view of part of the molding device and clearly illustrates how the molding device is designed by arrangement of the attachable elements 5 and 6 on the upper endless loop 4, or the compacting and guiding unit 4. Aside from the profile given in this embodiment to the attachable elements 5 and 6, namely a profile of rectangular cross section, a wide variety of shapes for the attachable elements 5 and 6 is naturally conceivable, including triangles, trapezoids, semicircles and the like.

It is likewise conceivable to provide the attachable elements 5 and 6 not (only) on the upper endless loop 4, that is, on the compacting and guiding unit 4, but to provide them additionally or alternatively on the conveyor unit 3. These variants are shown in Fig. 5 and 6 as cross-sectional views.

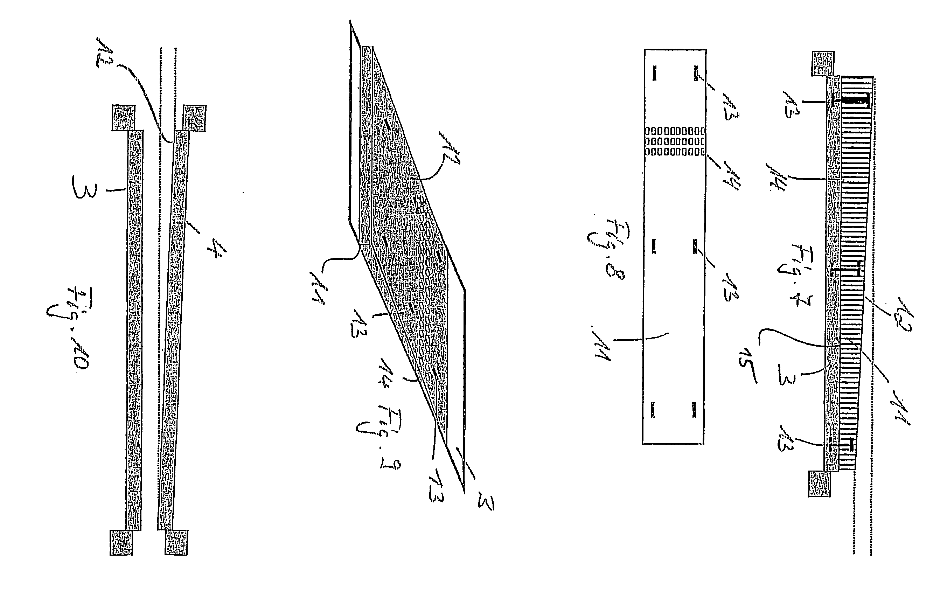

Another embodiment of a molding element 11, engineered as attachable element, can be seen in Fig. 7, which shows a partial cross-sectional view of a part of a device for producing insulation panels according to the invention. In this embodiment, the molding element consists of a single member which extends over the entire width of, for example, the conveyor unit 3. The height of the molding element 11 decreases across the breadth thereof, so that the molding surface 12 is inclined with respect to the conveyor unit 3 or to the original conveying plane 15 of the conveyor unit 3. This wedge-shaped design of the molding element 11 or attachable element 11 produces a wedge-shaped thermal insulation element whose principal surfaces are mutually inclined, i.e. subtend an angle. Insulation elements of this nature are especially suitable for the insulation of sloping roofs, roof flashings, valley roofs etc., where the insulation panels need a suitable surface incline of 2 to 5 % in order to ensure that rainwater will run off to the roof outlets. Thermal insulation panels of this kind are readily manufactured with the devices shown in Fig. 7 to 10.

As is also evident from Fig. 7, the attachable element 11 is connected with the conveyor unit 3 via a plurality of quick-release closures 13. A wide variety of such closures is available, which ensure secure connection of the attachable element 11 with the conveyor unit 3 and also permit rapid exchange of the attachable elements. Latch-type closures, snap closures and bayonet catches have proved especially suitable, while screwed closures are also possible.

Fig. 8 shows a top view of part of the device of Fig. 7. Only some of the channels 14 shown in Fig. 7 are shown here, although in reality they extend over the entire attachable element 11. The perforations or conduits 14 serve as channels for the hot air that is normally blown through the conveyor unit 3, i.e. the lower endless loop 3, or the upper endless loop 4 in a tunnel furnace 1 in order to cure the mineral wool. The device or part thereof shown in Fig. 7 and 8 is shown again in Fig. 9 from a different perspective. This once again illustrates how, on account of the attachable element 11 being wedge-shaped, a molding surface 12 is formed that is inclined toward the usually existent conveying plane 15 of the conveyor unit 3, so that the insulation panels thus produced are likewise wedge-shaped.

Another embodiment for the production of wedge-shaped thermal insulation elements is shown in Fig. 10. This embodiment has no attachable elements. Instead, the entire upper endless loop 4 is inclined toward the conveyor unit 3, so that here too, a sloping molding surface 12 is obtained. This embodiment requires provision only of the necessary means for supporting the upper endless loop in a sloping position, and for adjusting the angle of slope. In the same way, of course, means can be provided for adjusting the lower endless loop, or the conveyor unit 3, in a similar manner.

## Claims

1. A device for producing insulation elements made of mineral wool, such as rock wool or glass wool, containing mineral wool and a curable binder, comprising a conveyor on which the insulation material, especially in the form of a continuous insulation blanket, is deposited prior to curing and transported through a tunnel furnace (1) comprising a molding device inside the tunnel furnance (1), said molding device, while reducing the cross section of the gap through which the insulation material is transported within the tunnel furnance (1) and compacting the insulation material as it passes through, being provided in such a manner that permanent impressions and/or deformations are produced in the insulation material, **characterized in that** the molding element has an inclined planar molding surface (12).

2. The device of claim 1,
**characterized in that**
the molding device is integrated in the conveyor unit within the tunnel furnance, said conveyor unit comprising at least one molding element (4; 5, 6; 11) to form the impression(s) and/or deformation(s), during which process, as a result of contact, especially pressure contact, with the molding surface (12) of the molding element, the insulation material to be molded assumes a cross-sectional profile that deviates from the rectangular cross section of the incoming insulation material.

3. The device of claim 1 or 2,
**characterized in that**
the molding device inside the tunnel furnance (1) has at least one molding element opposite the conveyor unit, at least a second molding element in the conveying plane of the conveyor unit, especially opposite the first molding element, and/or third and/or fourth molding elements lateral to the conveyor unit.

4. The device of claim 3,
**characterized in that**
the first molding element is formed by a compacting and guiding unit (4), especially in the form of a flight belt, which, together with the conveyor unit, compacts the insulation material (2) or transports it at the upper side.

5. The device of claim 3,
**characterized in that**
the first molding element and/or the second molding element are engineered as attachable elements (5, 6, 11) for the conveyor unit (3) or a compacting and guiding unit (4), which, together with the conveyor unit, compacts the insulation material or transports it at the upper side.

6. The device of claim 5,
**characterized in that**
the attachable elements (5, 6, 11) and the conveyor unit are engineered as metal components that have the form of gratings or are provided with ventilation channels, said components being made especially of heat-resistant materials and preferably being of segmented design.

7. The device of claim 5 or 6,
**characterized in that**
the attachable elements (5, 6, 11) for attachment to the conveyor and/or compacting and guiding unit (4) have quick-release closures (13), especially latch-type closures, snap closures, screwed closures or bayonet catches.

8. The device of claim 3 or 4,
**characterized in that**
the first and/or second molding element is arranged such that with respect to the conveying plane (15) of the conveyor unit (3), its molding surface (12) is inclined about the longitudinal transport axis.

9. The device according to one of the preceding claims,
**characterized in that**
the molding element of the molding device is engineered as a kind of endless loop, preferably comprising a large number of successive segments.

10. A method of producing insulation elements made of mineral wool, such as rock wool or glass wool, containing mineral wool and a curable binder, in which method the insulation material, especially in the form of a continuous insulation blanket, is deposited on a conveyor prior to curing and transported through a tunnel furnance (1) in order to be cured, wherein while the insulation material is curing during its passage through the tunnel furnance (1), sections of the insulation material are subjected to controlled compaction in such a manner that permanent impressions and/or deformations are produced in the insulation blanket, **characterized in that** before or during curing, the insulation material is provided with a non-rectangular cross-sectional profile having a triangular shape or a trapezoidal shape.

11. The method of claim 10
**characterized in that**
the cross-sectional profile of the insulation element displays two parallel recesses (7 and 8) in one surface.

12. The method according to one of the claims 10 or 11,
**characterized in that**
while the insulation material is being molded into shape, it is compacted to varying degrees depending on the type of profile, with the result that the apparent density within the insulation elements varies accordingly.

13. An insulation element made of mineral wool, such as rock wool or glass wool, which is of non-rectangular cross-sectional profile and which, in particular, varies in height over the cross-section and has areas (9, 10) of different apparent density , **characterized in that** the insulation element is provided with a non-rectangular cross-sectional profile having a triangular shape or a trapezoidal shape.

14. The insulation element of claim 13,
**characterized in that**
the insulation element has a higher apparent density in thinner areas than in thicker areas.

15. The insulation element of claim 13 or 14,
**characterized in that**
the cross-sectional profile of the insulation element displays, in one surface, two parallel recesses (7 and 8) in the area of which the apparent density is higher than in very thick areas.

## Patentansprüche

1. Vorrichtung zur Herstellung von Dämmelementen aus Mineralwolle, wie Stein- oder Glaswolle mit Mineralwolle und einem aushärtbaren Bindemittel, einem Förderer, auf dem das Dämmmaterial, insbesondere in Form einer endlosen Dämmstoffbahn vor dem Aushärten abgelegt und durch einen Tunnelofen (1), geführt wird, mit einer Formgebungseinrichtung innerhalb des Aushärteofens, die unter Verringerung des Förderspaltquerschnitts für das Dämmmaterial im Tunnelofen (1) mit Kompression auf die durchgeführte Dämmstoffbahn anlegbar ist, dergestalt, dass bleibende Eindrücke und/oder Deformationen in das Dämmmaterial eingeformt sind,
**dadurch gekennzeichnet, dass**
das Formelement eine schräg angeordnete ebene Fläche aufweist

2. Vorrichtung nach Anspruch 1, **dadurch gekennzeichnet, dass** die Formgebungseinrichtung in die innerhalb des Tunnelofens befindliche Fördereinrichtung integriert ist, die zumindest ein Formelement (4; 5, 6; 11) zur Ausbildung der Einprägung(en) bzw. Deformation(en) umfasst, wobei das zu formende Dämmmaterial durch den Kontakt, insbesondere Druckkontakt mit der Formgebungsfläche (12) des Formelements eine von der Rechteckform des abgelegten Dämmmaterials abweichende Querschnittskontur über dem Querschnitt annimmt.

3. Vorrichtung nach Anspruch 1 oder 2,
**dadurch gekennzeichnet, dass**
die Formgebungseinrichtung innerhalb des Tunnelofens (1) mindestens ein erstes Formelement gegenüberliegend der Fördereinrichtung, mindestens ein zweites Formelement in der Förderebene der Fördereinrichtung, insbesondere gegenüberliegend dem ersten Formelement, und/oder mindestens dritte und/oder vierte Formelemente seitlich der Fördereinrichtung aufweist.

4. Vorrichtung nach Anspruch 3,
**dadurch gekennzeichnet, dass**
das erste Formelement durch eine Komprimierungs- und Führungseinrichtung (4), insbesondere in Form eines Flight-Bandes gebildet wird, welche zusammen mit der Fördereinrichtung das Dämmmaterial (2) komprimiert oder an der Oberseite befördert.

5. Vorrichtung nach Anspruch 3,
**dadurch gekennzeichnet, dass**
das erste Formelement und/oder das zweite Formelement als Aufsatzelemente (5, 6, 11) für die Fördereinrichtung (3) oder eine Komprimierungs- und Führungseinrichtung (4),
welche zusammen mit der Fördereinrichtung das Dämmmaterial komprimiert oder an der Oberseite befördert, ausgebildet sind.

6. Vorrichtung nach Anspruch 5,
**dadurch gekennzeichnet, dass**
die Aufsatzelemente (5, 6, 11) und die Fördereinrichtung als gitterartige oder mit Lüftungskanälen versehene Metallelemente, insbesondere aus hitzebeständigen Werkstoffen, vorgesehen sind, die vorzugsweise segmentartig ausgebildet sind.

7. Vorrichtung nach Anspruch 5 oder 6,
**dadurch gekennzeichnet, dass**
die Aufsatzelemente (5, 6, 11) zur Verbindung mit der Förder- und/oder Komprimierungs- und Führungseinrichtung (4) Schnellverschlüsse (13), insbesondere Rast-, Schnapp-, Schraub- oder Bajonettverschlüsse aufweisen.

8. Vorrichtung nach Anspruch 3 oder 4,
**dadurch gekennzeichnet, dass**
das erste und/oder zweite Formelement mit seiner Formgebungsfläche (12) gegenüber der Förderebene (15) der Fördereinrichtung (3) um die Förderlängsachse geneigt angeordnet ist.

9. Vorrichtung nach einem der vorhergehenden Ansprüche,
**dadurch gekennzeichnet, dass**
das Formelement der Formgebungseinrichtung in einer Art Endlosband, insbesondere mit einer Vielzahl hintereinander angeordneter Segmente ausgebildet ist.

10. Verfahren zur Herstellung von Dämmelementen aus Mineralwolle , wie Stein- oder Glaswolle enthaltend Mineralwolle und ein aushärtbares Bindemittel, bei dem das Dämmmaterial vor dem Aushärten auf einem Förderer abgelegt und zum Aushärten durch einen Tunnelofen (1) bewegt wird, wobei das Dämmmaterial während des Aushärtevorgangs im Durchlauf durch den Tunnelofen (1) gesteuert bereichsweise einer gesteuerten Verdichtung unterzogen wird, derart, dass bleibende Einprägungen und/oder Deformationen in der Dämmstoffbahn erzeugt werden,
**dadurch gekennzeichnet, dass**
das Dämmmaterial vor oder während dem Aushärten mit einer zur Rechtecksform unterschiedlichen Querschnittskontur mit einer Dreiecksform oder einer Trapezform versehen wird.

11. Verfahren nach Anspruch 10,
**dadurch gekennzeichnet, dass**
die Querschnittskontur des Dämmelements zwei parallele, auf einer Oberfläche angeordnete Aussparungen (7 und 8) aufweist.

12. Verfahren nach Anspruch 10 oder 11,
**dadurch gekennzeichnet, dass**
bei der Konturausbildung das Dämmmaterial entsprechend der Konturform unterschiedlich stark komprimiert wird, so dass die Rohdichte innerhalb der Dämmelemente entsprechend unterschiedlich ist.

13. Dämmelement aus Mineralwolle wie Stein- oder Glaswolle, welches im Querschnitt eine zur Rechtsecksform unterschiedliche Querschnittskontur mit insbesondere variabler Höhe über dem Querschnitt und Bereiche (9, 10) mit unterschiedlicher Rohdichte aufweist,
**dadurch gekennzeichnet dass**
das Dämmelement eine nicht-rechteckförmige Querschnittskontur mit einer Dreiecksform oder einer Trapezform aufweist.

14. Dämmelement nach Anspruch 13,
**dadurch gekennzeichnet dass**
das Dämmelement in Bereichen geringerer Dicke eine höhere Rohdichte im Vergleich zu Bereichen größerer Dicke aufweist.

15. Dämmelement nach Anspruch 13 oder 14,
**dadurch gekennzeichnet dass**,
die Querschnittskontur des Dämmelements zwei parallele, auf einer Oberfläche angeordnete Aussparungen (7 und 8) mit Bereichen höherer Rohdichte im Vergleich zu den Bereichen großer Dicke aufweist.

## Revendications

1. Dispositif de production d'éléments isolants constitués de laine minérale, telle que la laine de roche ou la laine de verre, contenant de la laine minérale et un liant durcissable, comprenant un transporteur sur lequel le matériau isolant, en particulier sous la forme d'une couverture isolante continue, est déposé avant le durcissement et transporté à travers un four tunnel (1) comprenant un dispositif de moulage à l'intérieur du four tunnel (1), ledit dispositif de moulage, tout en réduisant la section de l'espacement à travers lequel le matériau isolant est transporté à l'intérieur du four tunnel (1) et compactant le matériau isolant lorsqu'il passe à travers ce dernier, est agencé de telle manière que des impressions et/ou déformations permanentes sont produites dans le matériau isolant, **caractérisé en ce que** l'élément de moulage comporte une surface de moulage plane inclinée (12).

2. Dispositif selon la revendication 1,
**caractérisé en ce que**
le dispositif de moulage est intégré dans l'unité de transporteur à l'intérieur du four tunnel, ladite unité de transporteur comprenant au moins un élément de moulage (4 ; 5, 6 ; 11) afin de former la ou les impression(s) et/ou déformation(s), pendant lequel processus, sous l'effet d'un contact, en particulier d'un contact à pression, avec la surface de moulage (12) de l'élément de moulage, le matériau isolant à mouler adopte un profil en coupe qui s'écarte de la section rectangulaire du matériau isolant entrant.

3. Dispositif selon la revendication 1 ou 2,
**caractérisé en ce que**
le dispositif de moulage à l'intérieur du four tunnel (1) comporte au moins un élément de moulage opposé à l'unité de transporteur, au moins un deuxième élément de moulage dans le plan de transport de l'unité de transporteur, en particulier opposé au premier élément de moulage, et/ou des troisième et/ou quatrième éléments de moulage latéraux à l'unité de transporteur.

4. Dispositif selon la revendication 3,
**caractérisé en ce que**
le premier élément de moulage est formé par une unité de compactage et de guidage (4), en particulier sous la forme d'une courroie de déviation, qui, conjointement à l'unité de transporteur, compacte le matériau isolant (2) ou le transporte au niveau du côté supérieur.

5. Dispositif selon la revendication 3,
**caractérisé en ce que**
le premier élément de moulage et/ou le deuxième élément de moulage sont conçus comme des éléments pouvant être fixés (5, 6, 11) pour l'unité de transporteur (3) ou une unité de compactage et de guidage (4), qui, conjointement à l'unité de transporteur, compacte le matériau isolant ou le transporte au niveau du côté supérieur.

6. Dispositif selon la revendication 5,
**caractérisé en ce que**
les éléments pouvant être fixés (5, 6, 11) et l'unité de transporteur sont conçus comme des composants métalliques ayant la forme de grilles ou sont dotés de canaux de ventilation, lesdits composants étant en particulier constitués de matériaux résistant à la chaleur et étant de préférence de conception segmentée.

7. Dispositif selon la revendication 5 ou 6,
**caractérisé en ce que**
les éléments pouvant être fixés (5, 6, 11) destinés à être fixés au transporteur et/ou à l'unité de compactage et de guidage (4) comportent des fermetures à dégagement rapide (1-3), en particulier des fermetures de type loquet, des fermetures à pression, des fermetures à vis ou des fermetures à baïonnette.

8. Dispositif selon la revendication 3 ou 4,
**caractérisé en ce que**
le premier et/ou le deuxième élément de moulage sont agencés de sorte que par rapport au plan de transport (15) de l'unité de transporteur (3), sa surface de moulage (12) est inclinée autour de l'axe de transport longitudinal.

9. Dispositif selon l'une des revendications précédentes, **caractérisé en ce que**
l'élément de moulage du dispositif de moulage est conçu comme une sorte de boucle sans fin, comprenant de préférence un grand nombre de segments successifs.

10. Procédé de production d'éléments isolants constitués de laine minérale, telle que la laine de roche ou la laine de verre, contenant de la laine minérale et un liant durcissable, dans lequel procédé le matériau isolant, en particulier sous la forme d'une couverture isolante continue, est déposé sur un transporteur avant le durcissement et transporté à travers un four tunnel (11) afin d'être durci, dans lequel tandis que le matériau isolant durcit pendant son passage à travers le four tunnel (1), des sections du matériau isolant sont soumises à un compactage contrôlé de telle sorte que des impressions et/ou déformations permanentes sont produites dans la couverture isolante, **caractérisé en ce qu'**avant ou pendant le durcissement, le matériau isolant est doté d'un profil en coupe non rectangulaire ayant une forme triangulaire ou une forme trapézoïdale.

11. Procédé selon la revendication 10
**caractérisé en ce que**
le profil en coupe de l'élément isolant présente deux évidements parallèles (7 et 8) dans une surface.

12. Procédé selon l'une des revendications 10 ou 11, **caractérisé en ce que**
tandis que le matériau isolant est moulé en sa forme, il est compacté à différents degrés en fonction du type de profil, le résultat étant que la masse volumique apparente à l'intérieur des éléments isolants varie en conséquence.

13. Elément isolant constitué de laine minérale, telle que la laine de roche ou la laine de verre, qui est de profil en coupe non rectangulaire et qui, en particulier, a une hauteur qui varie sur la section et a des zones (9, 10) de masse volumique apparente différente, **caractérisé en ce que** l'élément isolant est doté d'un profil en coupe non rectangulaire ayant une forme triangulaire ou trapézoïdale.

14. Elément isolant selon la revendication 13, **caractérisé en ce que**
l'élément isolant a une masse volumique apparente plus élevée dans les zones plus fines que dans les zones plus épaisses.

15. Elément isolant selon la revendication 13 ou 14, **caractérisé en ce que**
le profil en coupe de l'élément isolant présente, sur une surface, deux évidements parallèles (7 et 8) dans la zone dont la masse volumique apparente est plus élevée que dans les zones très épaisses.
